# EUROPEAN PATENT SPECIFICATION

(11) **EP 2 696 305 B1**
(45) Date of publication and mention of the grant of the patent: **21.03.2018**
(21) Application number: 11795208.5
(22) Date of filing: 15.08.2011
(51) Int. Cl.: G06F 21/62

(54) **METHOD AND DEVICE FOR FILE PROTECTION**
VERFAHREN UND VORRICHTUNG FÜR DATEISCHUTZ
PROCÉDÉ ET DISPOSITIF DE PROTECTION DE FICHIERS

(43) Date of publication of application: 12.02.2014
(73) Proprietor: Huawei Device Co., Ltd., Shenzhen, Guangdong 518129 (CN)
(72) Inventor: GUO, Zejin, Shenzhen Guangdong 518129 (CN); HE, Feng, Shenzhen Guangdong 518129 (CN)
(74) Representative: Pfenning, Meinig & Partner mbB
(86) International application number: PCT/CN2011/078428
(87) International publication number: WO 2011/157242

(56) References cited:
- EP-A1- 2 113 856
- CN-A- 1 770 051
- CN-A- 101 341 490
- CN-A- 101 350 047
- CN-A- 101 694 724
- CN-A- 102 129 540
- GB-A- 2 262 633
- US-A1- 2003 191 938

## Description

### TECHNICAL FIELD

The present invention relates to the field of information security, and in particular, to a method and an apparatus for protecting a file.

### BACKGROUND

Currently, the multimedia functions of a terminal device (such as a mobile phone, a tablet computer, a media player, a game machine, a palmtop computer, or a notebook computer) are getting more and more powerful, which may easily record an audio, take a picture, or shoot a video, and store it. Take mobile phones as an example. Basically, all existing mobile phones possess functions, such as recording, photographing, and videotaping, and have a powerful storage capability. Personal information, such as a recording, a picture, and a video can be conveniently stored in a memory card of a mobile phone, which may be played by the mobile phone when necessary. Particularly, with the popularization of the open source operating system Android with Linux as the kernel among smartphones, the multimedia functions of smartphones have become more powerful.

Currently, it often occurs that a mobile phone or a mobile phone memory card is lost, and multimedia files in the lost mobile phone or the mobile phone memory card may be copied to and used on other devices at will. As the Internet is quite developed, personal information in the lost mobile phone or mobile phone memory card may easily flow to the Internet, resulting in private information leakage of a person concerned and a severe violation of personal privacy thereof, while exerting negative impact on the work and life of the person concerned. Apart from terminal devices such as a mobile phone, other terminal devices are also exposed to the problem of private information leakage after loss. However, currently there is no method available for restricting a multimedia file in a terminal device (especially a smart terminal device) or its memory card from being copied to and used on another device. Therefore, the problem that the multimedia file in the lost mobile phone or mobile phone memory card is illegally copied to and used on another device, resulting in personal private information leakage is not solved.

GB2262633 A describes a processing apparatus having a number of source processors and stored files, a security circuit automatically encrypts the header of files of confidential data when an authorised processor ceases to access the file. Subsequently, if an unauthorised processor attempts to access the confidential file it does not recognise it as a data file and access is not obtained. If an authorised processor attempts to access the confidential file a decryption circuit within the security circuit automatically decrypts the header so that access is obtained.

US2003/191938 A1 describes a secure processing system provides for the encryption of files by compression of the content of files and encryption of the compressed content.

### SUMMARY

Embodiments of the present invention provide a method and an apparatus for protecting a file, which can solve the problem that, currently, a multimedia file in a terminal device or its memory card cannot be restricted from being copied to or used on another device, thereby easily leading to illegal leakage of personal information of a person concerned.

The technical solutions for achieving the foregoing objective are as follows:

An embodiment of the present invention provides a method for protecting a file, including:
generating a secure file header by using an original file header of a file to be protected, wherein when no permission is granted, the secure file header is capable of restricting accessing content of a file where the secure file header is located; and
replacing the original file header of the file to be protected with the secure file header to convert the file to be protected to a secure file;
wherein the generating a secure file header by using an original file header of a file to be protected is: acquiring an encrypted file header by compressing and encrypting the original file header of the file to be protected and then, acquiring the secure file header by adding identification information to the encrypted file header;
wherein the following manner is adopted to add the identification information to the encrypted file header:
   forming, before adding the identification information that identifies the file as the secure file into the encrypted file header, the secure file header by combining the identification information with the encrypted file header, wherein the size of the secure file header is equal to with the size of the original file header of the file to be protected.

An embodiment of the present invention further provides an apparatus for protecting a file, including:
a secure file header processing unit and a replacement processing unit; where
the secure file header processing unit is configured to generate a secure file header by using an original file header of a file to be protected, wherein when no permission is granted, the secure file header is capable of restricting accessing content of a file where the secure file header is located; and
the replacement processing unit is configured to replace the original file header of the file to be protected with the secure file header to convert the file to be protected to a secure file;
wherein the secure file header processing unit comprises:
   a compression unit, an encryption unit, and an identification information adding unit; wherein
   the compression unit is configured to compress the original file header of the file to be protected;
   the encryption unit is configured to encrypt content of the file header compressed by the compression unit to acquire an encrypted file header; and
   the identification information adding unit is configured to add identification information to the encrypted file header acquired through the encryption by the encryption unit to acquire a secure file header; wherein the identification information adding unit forming, before adding the identification information that identifies the file as the secure file into the encrypted file header, the secure file header by combining the identification information with the encrypted file header, wherein the size of the secure file header is equal to the size of the original file header of the file to be protected.

It may be seen from the technical solutions provided by the embodiments of the present invention that, in the embodiments of the present invention, by replacing a secure file header with an original file header of a file to be protected, so as to convert the file to be protected to a secure file, the secure file header can prevent another peripheral from performing an access operation on content of the secure file. This method effectively restricts another peripheral from performing access operations, such as illegal read and write, on the file content, which can desirably protect the file content and avoid the problem that after a terminal device or its memory card is lost, personal private information is leaked because random access of another device to its file content cannot be restricted. In addition, in this method, as only the manner of replacing the secure file header with the original file header is used to protect the file content, the file access operation efficiency of a local device is not affected.

### BRIEF DESCRIPTION OF DRAWINGS

To illustrate the technical solutions in the embodiments of the present invention or the prior art more clearly, the following briefly introduces the accompanying drawings required for describing the embodiments or the prior art.
FIG. 1 is a flowchart of a method for protecting a file according to Embodiment 1 of the present invention;
FIG. 2 is a schematic principle diagram of read and write for file protection according to Embodiment 1 of the present invention;
FIG. 3 is a flowchart of converting a file to be protected to a secure file in an Android mobile phone according to Embodiment 1 of the present invention;
FIG. 4 is a schematic principle diagram of file protection according to Embodiment 1 of the present invention;
FIG. 5 is a flowchart of decrypting a secure file to an original file in an Android mobile phone according to Embodiment 1 of the present invention;
FIG. 6 is a schematic diagram of an apparatus for protecting a file according to Embodiment 2 of the present invention; and
FIG. 7 is a schematic diagram of a decryption unit of an apparatus for protecting a file according to Embodiment 2 of the present invention.

### DESCRIPTION OF EMBODIMENTS

For ease of understanding, the following clearly and completely describes the technical solutions in the embodiments of the present invention with reference to the accompanying drawings in the embodiments of the present invention.

In the embodiments of the present invention, an encrypted file header is acquired by compressing and encrypting an original file header of a file to be protected stored in a terminal device, then, identification information is added into the encrypted file header to acquire a secure file header, and the secure file header is replaced with the original file header of the file to be protected to convert the file to be protected to a secure file. In this way, access operations, such as read and write, on content of the secure file by another peripheral can be prevented through the secure file header of the secure file, so that even if the secure file is copied to another peripheral, accessing the content of the secure file is prevented as the content of the secure file header of the secure file fails to be decrypted, thereby achieving the purpose of protecting the file content and avoiding the problem that after a terminal device or its memory card is lost, personal private information is leaked because random access to its file content by another device cannot be prevented. In addition, in this method, as only the manner of replacing the secure file header with the original file header is used to protect the file content, the file access operation efficiency of a local device is not affected.

### Embodiment 1

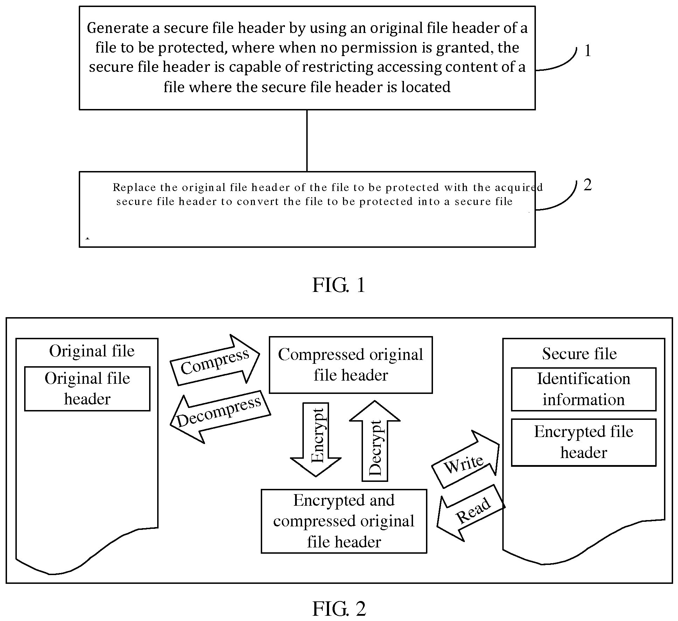

FIG. 1 is a flowchart of a method for protecting a file according to an embodiment of the present invention. The method for protecting a file includes the following steps.

Step 1: Generate a secure file header by using an original file header of a file to be protected, where when no permission is granted, the secure file header is capable of restricting accessing content of a file where the secure file header is located.

The processing process of step 1 specifically is: specifying a file to be protected in a terminal device, compressing an original file header of the file to be protected, acquiring an encrypted file header by encrypting content of the compressed file header, and then, adding identification information to the encrypted file header (the added identification information is information used to identify the file as a secure file) to acquire a secure file header.

Step 2: Replace the original file header of the file to be protected with the acquired secure file header. The secure file header may be written into an initial position of the file to be protected to replace the original file header of the file, so as to convert the file to be protected to a secure file.

As the secure file after the conversion in step 2 possesses a secure file header, when no permission is granted (that is, after decryption, content of the original file header corresponding to the secure file header fails to be read), the access to content of this secure file by another device or a local device may be restricted by the secure file header.

In step 1 in the foregoing method, the specified file to be protected in the terminal device may be: any one or more of an audio file (such as a song, a recording of a recorder of a terminal device), an image file (such as a picture, a photograph generated and taken by a camera of a terminal device), a video file (such as a video, a video generated and shot by a video camera of a terminal device), a map data file, a 3D model data file, a CAD data file, and an executable file. As the coding structure of such files is more complex, if their file header parts are encrypted and restricted, and the content of the encrypted file header (such as content of the initial 1024 bytes of the file) fails to be decrypted and read, the file content cannot be cracked.

In step 1 in the foregoing method, common compression methods (such as a Z77 algorithm and a Snappy algorithm) may be adopted to compress the original file header of the file to be protected. The compression can effectively reduce its size, and makes adding the identification information that is used to identify the file as the secure file convenient.

In step 1 in the foregoing method, common encryption methods (such as an MD5 encryption algorithm and a Rijndael encryption algorithm) may be adopted to encrypt the content of the compressed file header; and the encryption may be performed by adopting any one of the following keys, including:
(1) a key acquired by encrypting, by using a password input by a subscriber, a machine unique code of a local device where the file to be protected is located;
(2) a password input by a subscriber;
(3) a machine unique code of a local device where the file to be protected is located; and
(4) a password input by a subscriber and a machine unique code of a local device where the file to be protected is located.

The password input by the subscriber and the adopted key may both be stored in a memory area of the local device where the file to be protected is located, and if the terminal device is a terminal device with a subscriber identity module (SIM card), the password input by the subscriber and the adopted key may both be stored in the subscriber identity module (SIM card) of the terminal device.

In step 1 in the foregoing method, the following manner may be adopted to add the identification information (the identification information is the information used to identify the file as the secure file) to the file header after the encryption: before adding the identification information to the encrypted file header, combine the identification information and the encrypted file header to form a secure file header, where the size of the secure file header is consistent with the size of the original file header of the file to be protected (for instance, if the original file header is 1024 bytes, the secure file header formed by the identification information and the encrypted file header is also 1024 bytes).

For the terminal device that stores the file to be protected to conveniently access the secure file converted from the file to be protected, on the basis of the foregoing method, the following step may be further included:
when the local device where the file to be protected is located performs an access operation on the content of the secure file converted from the file, after processing the secure file header of the secure file, reading its content, and after the reading is successful, allowing the access operation (such as a read or write operation on the file) on the secure file content, and otherwise, not allowing the access operation on the secure file content, and returning prompt information indicating that the operation is not allowed.

In the foregoing processing steps, to be specific, first, the file header of the file is acquired, and if it is determined that the file header includes the identification information, it may be determined according to the identification information that the file is the secure file, and the encrypted file header is acquired from the secure file header (that is, the previously acquired file header) of the secure file (as the secure file header is formed by the identification information and the encrypted file header, the encrypted file header may be acquired from the secure file header after the identification information is confirmed); and
the original file header is acquired by decrypting and decompressing the acquired encrypted file header.

During decryption, a decryption algorithm corresponding to an encryption algorithm adopted by the original file header after the encryption and the compression may be adopted, such as the MD5 encryption algorithm and the Rijndael encryption algorithm; in addition, decrypting the encrypted file header may include the following processing manners based on whether the terminal device has the subscriber identity module (SIM card):
(1) if the terminal device does not have the subscriber identity module (SIM card), the key stored in the memory area of the terminal device may be directly read to decrypt the encrypted file header; and
(2) if the terminal device has the subscriber identity module (SIM card), first, it is determined whether the subscriber identity module (SIM card) in the terminal device is registered on an operation network, and if it is registered, the key stored in the subscriber identity module (SIM card) is read and the encrypted file header is decrypted by using the key; and if it is not registered, decryption failure prompt information is returned.

The foregoing manner (2) may fully utilize an authentication mechanism between the terminal device and the operation network to protect the key stored in the subscriber identity module (SIM card), and even after the terminal device is lost, if the subscriber reports the loss of the SIM card in the terminal device with an operator, the SIM card in the terminal device cannot be registered on the operation network, so that the terminal device cannot read the key in its SIM card and cannot decrypt the secure file in the terminal device, thereby effectively protecting the content of the secure file and avoiding privacy leakage.

A decompression algorithm corresponding to a compression algorithm used for compressing the original file header may be adopted during decompression, such as the Z77 algorithm and the Snappy algorithm.

The content of the original file header of the secure file acquired after the reading is successful is replaced with the secure file header of the secure file to acquire the original file, the file content of which may be accessed in common manners, so as to directly perform access operations, such as read and write, on the original file.

The specific operation of the method of the embodiment is shown in FIG. 2. Through the method for protecting a file that is provided by the embodiment of the present invention, without changing the size of the file, the compressed secure file header and the encryption realizes sound protection of the file content, and access operations, such as read and write, on the file content are not allowed on another device, thereby ensuring that the private information is not illegally leaked and meanwhile the complexity of an operation of the local device on the protected secure file is not increased and the operation efficiency is not affected.

A mobile phone running an Android operating system is taken as an example in the following to further illustrate the foregoing method for protecting a file.

The Android operating system is an open source mobile phone platform. In an Android system, a file system can be easily modified and consequently, the method provided by the embodiment of the present invention is used to perform security protection for file content in an Android mobile phone running the Android operating system without increasing the complexity of normal use of a mobile phone, such as preventing a file on the mobile phone from being illegally copied to other machines (such as a mobile phone, a tablet computer, or a computer) for performing operations, such as read and write.

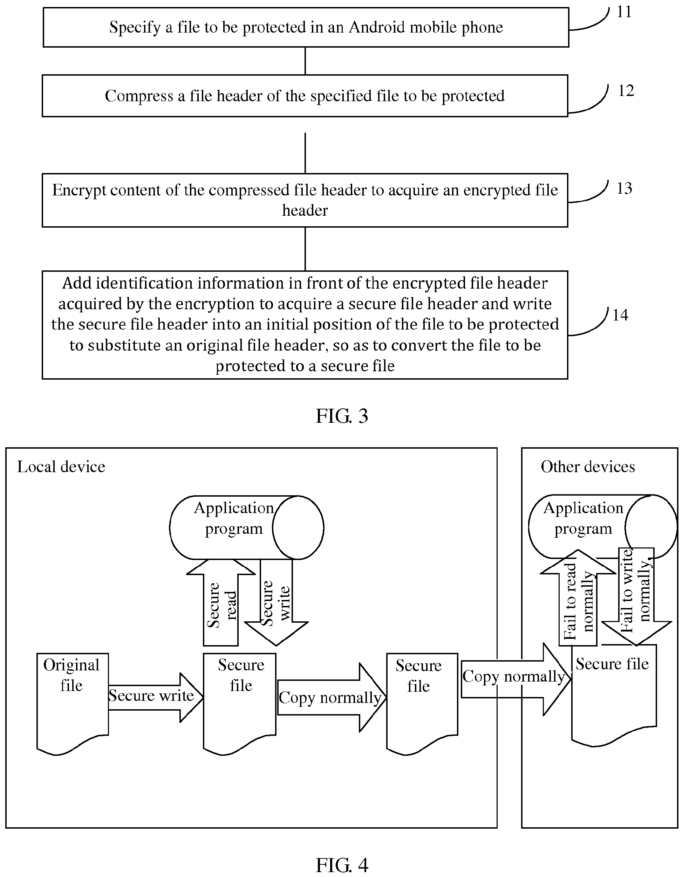

As shown in FIG. 3, performing security protection for a file in an Android mobile phone, that is, converting a specified file to a secure file may be implemented through the following steps.

Step 11: Specify a file to be protected in an Android mobile phone; for instance, the file to be protected may be specified in a file manager of the Android mobile phone.

Step 12: Compress a file header of the specified file to be protected, where the compression may adopt common compression methods (such as a Z77 algorithm and a Snappy algorithm).

Normally, for the file header of the file to be protected, content of the initial 1024 bytes of the file may be selected as the file header, which can ensure the security after the compression and the encryption and does not affect the file processing efficiency during subsequent decryption and read as well, and certainly the file content of any length starting from an initial position of the file may also be selected as the file header as long as it does not affect the read and write processing efficiency of a local device on the secure file converted from the file.

Step 13: Acquire the encrypted file header by encrypting the content after compressing the file header.

The encryption in step 13 may adopt common encryption algorithms (such as the MD5 encryption algorithm and the Rijndael encryption algorithm); during the encryption, a key acquired by encrypting, by using a password input by a subscriber, a machine unique code of the Android mobile phone may be adopted (a key (KeyO) acquired by encrypting the machine unique code (ID) by using a password (PWO) input by the subscriber for the first time is used as the key), and store the key (KeyO) in a SIM card of the Android mobile phone (such as storing it in a Key file on the SIM card); in use, if the subscriber changes the password, the original password (PWO) is encrypted by using the changed password (PWN) to acquire KeyN, and KeyN is also stored in the Key file that stores Key0 on the SIM card. The specific structure of the Key file may be shown in the following table:

| **File Content** | **Length (Byte)** |
|---|---|
| File version number | 4 |
| Key quantity | 4 |
| Key0 | 16 |
| KeyN | 16 |

The manner of storing the encryption key on the SIM card can effectively improve the security of file protection. Even if the mobile phone is lost, the Key file that stores the key on the SIM card may still be deleted by delivering a functional short message by the operator and if the SIM card of the mobile phone is changed, the Key file still cannot be read, thereby preventing others from opening a stored secure file on a lost mobile phone and better protecting private information of a person concerned.

A key for encrypting a file header in an Android mobile phone may be set in the following manners.

When the subscriber uses a recorder or a camera of an Android mobile phone for the first time, the subscriber is prompted to input a password (PW0), and the prompt information may be "Please input a password of 6 to 16 bits used to protect a recording, a picture, or a video file, and this password needs to be input when these files are decrypted". The machine unique code (ID) is encrypted by using the password (PWO) input by the subscriber to acquire the key (KeyO) to encrypt a multimedia file, and it is saved in the Key file, and the Key file is saved on a SIM card of the mobile phone. In this way, when a file is stored by using a recorder or camera program of the Android mobile phone, an audio or video file to be protected may directly be converted to a secure file and then the security of all audio files and video files recorded and pictures taken by the mobile phone can be protected.

Any one of the following may also be used as the key: (1) a password input by a subscriber; (2) a machine unique code of an Android mobile phone; or (3) a password input by a subscriber and a machine unique code of an Android mobile phone. The key may also be stored in a secure memory area of the Android mobile phone.

Step 14: Add identification information that identifies a file as a secure file in front of the encrypted file header after the encryption in step 13 to acquire the secure file header. The size of the secure file header is consistent with the size of the original file header (for instance, if the size of the original file header is 1024 bytes, the size of the secure file header is also 1024). Write the secure file header formed by the identification information and the encrypted file header into an initial position of the file to be protected to replace the original file header, so as to convert the file to be protected to the secure file.

As shown in FIG. 4, as the secure file acquired by the conversion possesses the secure file header, if the content of the original file header fails to be read by decrypting and decompressing the secure file header, the content of the secure file cannot be acquired, and even if the file is copied to other devices, the content of the secure file still cannot be acquired, thereby achieving the purpose of file content protection.

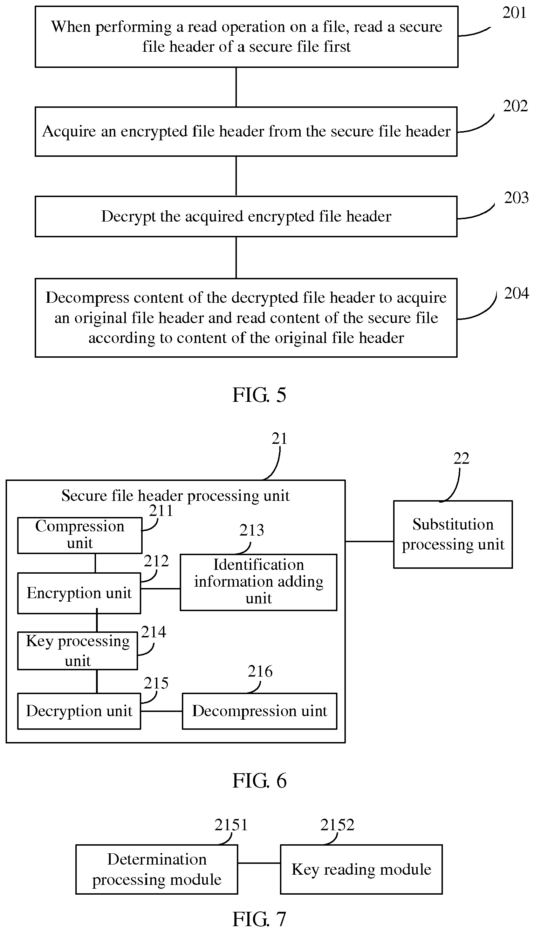

To facilitate a read operation of the Android mobile phone on the secure file stored in it, as shown in FIG. 5, the following steps may be adopted for processing.

Step 201: When performing a read operation on a file, read a secure file header of a secure file first.

Step 202: Acquire an encrypted file header from the secure file header (as the secure file header is formed by identification information and the encrypted file header, the encrypted file header may be acquired from the secure file header after the identification information is confirmed).

Step 203: Decrypt the acquired encrypted file header; the following manners may be adopted to decrypt the encrypted file header.

First, it is determined whether the subscriber identity module (SIM card) in the Android mobile phone is registered on an operation network, and if it is registered, read the key stored in the subscriber identity module (SIM card) and use the read key to decrypt the encrypted file header, and perform step 24; if it is not registered, return decryption failure prompt information and end the read operation of the file.

If the key is not stored in the subscriber identity module (SIM card), and, instead, it is stored in the secure memory area of the Android mobile phone, when the encrypted file header is decrypted, the key stored in the secure memory area may be directly read to decrypt the encrypted file header.

Step 204: Decompress content of the decrypted file header to acquire an original file header and read its content (specifically, the content of the decrypted file header may be decompressed to a memory of the Android mobile phone and then its content is read), and read content of the secure file according to content of the original file header.

By applying the methods in the foregoing steps 201 to 204 to the Android mobile phone, the secure read operation of a file in the Android mobile phone is realized, and the content of the secure file may be easily read directly without other additional operations by a subscriber.

To facilitate a write operation of the Android mobile phone on an opened secure file, when a write operation is performed on an opened secure file, the write operation may be performed after the opened file is converted to a secure file by adopting the foregoing steps 11 to 14. That is to say, in the Android mobile phone, the methods in the foregoing steps 11 to 14 may be adopted to re-implement the secure write operation of a file in the Android mobile phone. Right

In the Android mobile phone, no processing may be performed on operations, such as copying, cutting, and deleting a secure file. Instead, original file operation manners, such as copying, cutting, and deleting are adopted.

When the foregoing methods are used to protect a file in the Android mobile phone, an encryption and a decryption operation menu are added to a right click menu of the mobile phone (such as a right click menu in a file manager program of the Android mobile phone), and when the encryption operation is selected, the file is converted to a secure file, and when the decryption operation is selected, the secure file is converted to a common file, and a subscriber password needs to be input for decryption.

To change the subscriber password on the Android mobile phone, the following operation steps may be adopted.

A menu for setting a security password may be added to the settings of the Android mobile phone. The subscriber needs to input the old password (PWO) as well as the new password (PW1), and decrypt Key0 by using the old password (PW0). If the decrypted ID' is identical with the machine unique code, the old password (PWO) is correct and the password change is successful; the old password (PWO) is encrypted by using the new password (PW1) to acquire Key1. Key0 and Key1 are stored in the Key file together. Key0 is still used to encrypt and decrypt the secure file.

When the password is to be changed again, PW1 and PW2 need to be input. Key1 is decrypted by using PW1 to acquire PW0'. Then, Key0 is decrypted by using PW0' to acquire ID'. If ID' is identical with the machine unique code, PW1 is correct, and the password change is successful. PW0 is encrypted by using PW2 to acquire Key2. Key0 and Key2 are stored in the Key file and Key1 is discarded.

In an unauthorized scenario, the Android mobile phone with the foregoing secure read and write functions is connected to a computer and the secure file in the mobile phone is copied to another device (such as a tablet computer or a computer). Although the secure file may be normally copied, the content (normally the length is 1024 bytes) of the secure file header cannot be interpreted because the device does not have the secure read and write functions and does not have the key for decryption as well. Therefore, valid information of the secure file cannot be acquired.

In an authorized scenario, the subscriber may first decrypt and convert the secure file in the mobile phone to a common file through a decryption operation and copy it to another device (such as a tablet computer or a computer), and then the read and write operation may be performed normally. During the implementation, the operation on the mobile phone may be set as "Decrypt and copy to...".

After a mobile phone memory card is lost or it is stolen in an unauthorized scenario, when it is used on another mobile phone or another computer, the valid information of the secure file still cannot be acquired. If the mobile phone is lost, the loss may be reported in time and the Key file that stores the key on the SIM card is deleted by delivering a functional short message by the operator to prevent unauthorized query of the content of the secure file on the mobile phone. After the mobile phone is lost, even if the loss is not reported, a subscriber who gets the mobile phone may only query the secure file on the local device. As the subscriber does not have a subscriber password for decryption, the subscriber cannot decrypt or copy the secure file to the computer or the network for use and propagation, thereby effectively restricting personal privacy leakage as a result of mobile phone loss.

By using the foregoing methods, not only a multimedia file (various audio and video files, and picture files) of a mobile phone, such as a recording file (normally in an AMR format)Android, an image file (normally in a JPG format), or a video file (normally in a 3GP format) of an Android mobile phone can be protected, but also any data file with a complex structure, including but not limited to, map data, 3D model data, or CAD data can be protected. As such files all possess a comparatively complex structure, in lack of file header information, valid content of the file is very difficult to recover. However, for files such as Txt and Bmp, as valid information may still be acquired even without a file header, the security effect is not obvious. Besides, for files with rather small file sizes, after the compression, there is no sufficient space to add a secure file header, so the secure protection processing cannot be performed.

By using the method of the embodiment of the present invention, when a terminal device such as an Android mobile phone performs a read or write operation on a stored secure file, it is dependent on a corresponding key (such as a machine unique code of the mobile phone and/or a password input by a subscriber), so that the secure file can only be normally read and written on this mobile phone and cannot be normally read and written on another machine (a mobile phone, a tablet computer, a computer, or the like) if it is not decrypted, and even if it is copied to another machine, the secure file cannot be opened for acquiring content of the file. This achieves the purpose of desirably protecting the content of the secure file and preventing personal private information leakage after the terminal device, such as a mobile phone is lost.

It can be known that, for a mobile phone or a terminal device running other operating systems, file protection can also be performed by using the method provided by the embodiment of the present invention; its implementation manner is basically the same as the implementation manner of that in the Android mobile phone, which is not described herein again. In addition, the method can also be used in the various operating systems running in a computer to implement file protection (for instance, a read and write operation of a secure file can be implemented by a read and write function of a HOOK file), so that the protected secure file can only be used on a local device and cannot be used on another device or uploaded to the Internet for use.

When the method of the embodiment is applied to an Android mobile phone, the following can be realized: (1) a recording, a picture, or a video acquired by a mobile phone can be automatically encrypted to effectively prevent leakage of personal multimedia information; (2) even if the mobile phone is lost, the personal multimedia information can also be processed securely; (3) as when a specified file to be protected is converted to a secure file, only a file header is processed (for example, the file header may be content of the 1024 bytes at an initial position of the file), the performance of an file operation is high and the operation efficiency is not affected; and (4) all the encrypted secure files are not changed in size and are transparent for file read and write of all applications and no other influences are generated.

### Embodiment 2

FIG. 6 is a schematic structural diagram of an apparatus for protecting a file according to an embodiment of the present invention. As shown in FIG. 4,the apparatus for protecting a file includes: a secure file header processing unit 21 and a replacement processing unit 22, where
the secure file header processing unit 21 is configured to generate a secure file header; and
the replacement processing unit 22 is configured to replace the secure file header generated by a secure file header generation unit 21 with an original file header of a file to be protected, so as to convert the file to be protected to a secure file, where the secure file header of the secure file prevents another peripheral from performing an access operation on content of the secure file.

The secure file header processing unit in the foregoing apparatus includes: a compression unit 211, an encryption unit 212, and an identification information adding unit 213, where
the compression unit 211 is configured to compress the original file header of the file to be protected;
the encryption unit 212 is configured to encrypt content of the file header compressed by the compression unit to acquire an encrypted file header; and
the identification information adding unit 213 is configured to add identification information to the encrypted file header acquired through the encryption performed by the encryption unit to acquire a secure file header.

The secure file header processing unit in the foregoing apparatus may further include: a key processing unit 214, configured to encrypt, by using a password input by a subscriber, a machine unique code of a local device where the file to be protected is located to acquire a key.

The secure file header processing unit in the foregoing apparatus may further include: a decryption unit 215 and a decompression unit 216, where
the decryption unit 215 is configured to decrypt the encrypted file header in the secure file header of the secure file; and
the decompression unit 216 is configured to decompress the content of the file header decrypted by the decryption unit to acquire the original file header.

The decryption unit 215 in the foregoing apparatus may be formed by the modules shown in FIG. 7, including: a determination processing module 2151 and a key reading module 2152, where
the determination processing module is configured to: when the key for decryption is acquired, if the key is stored in a subscriber identity module of the local device where the secure file is located, determine whether the subscriber identity module of the local device is registered on an operation network, and if it is registered, send an instruction for permission of reading the key to the key reading module, and if it is not registered, return prompt information indicating that the decrypted key fails to be acquired and send an instruction for ending subsequent processing; and
the key reading module is configured to read, after the instruction for permission of reading the key from the determination processing module is received, the stored key from the subscriber identity module of the local device.

The apparatus for protecting a file of the embodiment may be set in various devices, such as a mobile phone and a computer, to process the files therein and protect the files.

Based on the above, by using the method of the embodiments of the present invention, in a terminal device such as an Android mobile phone or a computer, without affecting normal use by a subscriber, the effective protection of files such as a multimedia file can be realized and content of a protected secure file in a mobile phone is not allowed to be opened on another device to achieve a purpose of avoiding private information leakage and protecting personal privacy.

The foregoing descriptions are merely exemplary specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for protecting a file, comprising:
generating a secure file header by using an original file header of a file to be protected, wherein when no permission is granted, the secure file header is capable of restricting accessing content of a file where the secure file header is located; and
replacing the original file header of the file to be protected with the secure file header to convert the file to be protected to a secure file; wherein the generating a secure file header by using an original file header of a file to be protected is: acquiring an encrypted file header by compressing and encrypting the original file header of the file to be protected and then, acquiring the secure file header by adding identification information to the encrypted file header;
wherein the following manner is adopted to add the identification information to the encrypted file header:
forming, before adding the identification information that identifies the file as the secure file into the encrypted file header, the secure file header by combining the identification information with the encrypted file header, wherein the size of the secure file header is equal to the size of the original file header of the file to be protected.

2. The method for protecting a file according to claim 1, wherein the encryption is encrypting content of the compressed file header.

3. The method for protecting a file according to claim 1 or 2, wherein a key used for the encryption is: a key acquired by encrypting, by using a password input by a subscriber, a machine unique code of a local device where the file to be protected is located;
or, a password input by a subscriber and/or a machine unique code of a local device where the file to be protected is located.

4. The method for protecting a file according to claim 3, wherein the password input by the subscriber and the key acquired by the encryption are both stored in a subscriber identity module of the local device where the file to be protected is located.

5. The method for protecting a file according to claim 3, wherein the following manners are adopted to acquire the key by encrypting, by using the password input by the subscriber, the machine unique code of the local device where the file to be protected is located:
when the subscriber uses a recorder or a camera of the local device for the first time, prompting the subscriber to input the password; and
acquiring the key for encryption by encrypting, by using the password input by the subscriber, the machine unique code of the local device.

6. The method for protecting a file according to any one of claims 1 to 5, wherein the replacing the original file header of the file to be protected with the secure file header is: writing the secure file header into an initial position of the file to be protected to replace the original file header of the file.

7. The method for protecting a file according to claim 1, wherein the file to be protected comprises: any one or more of an audio file, an image file, a video file, a map data file, a 3D model data file, a CAD data file, and an executable file.

8. The method for protecting a file according to any one of claims 1 to 5, wherein, when the local device where the file to be protected is located performs an access operation on content of the secure file converted from the file, the method further comprises:
acquiring the secure file header of the secure file and acquiring the encrypted file header from the secure file header;
acquiring content of the original file header by decrypting and decompressing the encrypted file header; and
permitting a corresponding access operation after the content of the secure file is acquired according to the acquired content of the original file header.

9. The method for protecting a file according to claim 8, wherein the decrypting the encrypted file header comprises:
acquiring a key for decryption, wherein the key is a key used for performing encryption on the compressed original file header to acquire the encrypted file header; and
decrypting the encrypted file header by using the acquired key and adopting a decryption algorithm identical with or corresponding to an encryption algorithm to acquire a compressed original file header.

10. The method for protecting a file according to claim 9, wherein, when the key for decryption is acquired, if the key is stored in the subscriber identity module of the local device where the secure file is located, it is determined whether the subscriber identity module in the local device is registered on an operation network, and if it is registered, the stored key is read from the subscriber identity module; and if it is not registered, prompt information indicating that the decrypted key fails to be acquired is returned and subsequent processing is ended.

11. An apparatus for protecting a file, comprising:
a secure file header processing unit (21) and a replacement processing unit, (22) wherein
the secure file header processing unit is configured to generate a secure file header by using an original file header of a file to be protected, wherein when no permission is granted, the secure file header is capable of restricting accessing content of a file where the secure file header is located, and
the replacement processing unit is configured to replace the original file header of the file to be protected with the secure file header to convert the file to be protected to a secure file;
wherein the secure file header processing unit comprises:
a compression unit (211), an encryption unit (212), and an identification information adding unit (213); wherein
the compression unit (211) is configured to compress the original file header of the file to be protected;
the encryption unit (212) is configured to encrypt content of the file header compressed by the compression unit to acquire an encrypted file header; and
the identification information adding unit (213) is configured to add identification information to the encrypted file header acquired through the encryption by the encryption unit to acquire a secure file header; wherein the identification information adding unit (213) forming, before adding the identification information that identifies the file as the secure file into the encrypted file header, the secure file header by combining the identification information with the encrypted file header, wherein the size of the secure file header is equal to the size of the original file header of the file to be protected.

12. The apparatus for protecting a file according to claim 11, wherein the secure file header processing unit further comprises:
a key processing unit (214) configured to encrypt, by using a password input by a subscriber, a machine unique code of a local device where the file to be protected is located to acquire a key.

13. The apparatus for protecting a file according to claim 11 or 12, wherein the secure file header processing unit further comprises:
a decryption (215) and a decompression (216) wherein
the decryption unit is configured to decrypt the encrypted file header in the secure file header of the secure file; and
the decompression unit is configured to decompress the content of the file header decrypted by the decryption unit to acquire the original file header.

14. The apparatus for protecting a file according to claim 13, wherein the decryption unit comprises:
a determination processing module (2151) and a key reading module (2152) wherein
the determination processing module is configured to: when the key for decryption is acquired, if the key is stored in a subscriber identity module of the local device where the secure file is located, determine whether the subscriber identity module of the local device is registered on an operation network, and if it is registered, send an instruction for permission of reading the key to the key reading module, and if it is not registered, return prompt information indicating that the decrypted key fails to be acquired and send an instruction for ending subsequent processing; and
the key reading module is configured to read, after the instruction for permission of reading the key from the determination processing module is received, the stored key from the subscriber identity module of the local device.

## Patentansprüche

1. Verfahren zum Schützen einer Datei, das Folgendes umfasst:
Erzeugen eines sicheren Dateikopfs unter Verwendung eines ursprünglichen Dateikopfs einer Datei, die geschützt werden soll, wobei dann, wenn keine Genehmigung erteilt wird, der sichere Dateikopf das Zugreifen auf den Inhalt einer Datei, in der sich der sichere Dateikopf befindet, einschränken kann; und
Ersetzen des ursprünglichen Dateikopfs der Datei, die geschützt werden soll, durch den sicheren Dateikopf, um die Datei, die geschützt werden soll, in eine sichere Datei umzusetzen;
wobei das Erzeugen eines sicheren Dateikopfs unter Verwendung eines ursprünglichen Dateikopfs einer Datei, die geschützt werden soll, Folgendes ist:
Erhalten eines verschlüsselten Dateikopfs durch Komprimieren und Verschlüsseln des ursprünglichen Dateikopfs der Datei, die geschützt werden soll, und dann Erhalten des sicheren Dateikopfs durch Hinzufügen von Identifizierungsinformationen zu dem verschlüsselten Dateikopf;
wobei die folgende Art eingesetzt wird, um die Identifizierungsinformationen zu dem verschlüsselten Dateikopf hinzuzufügen:
Bilden vor dem Hinzufügen der Identifizierungsinformationen, die die Datei als die sichere Datei identifizieren, in den verschlüsselten Dateikopf des verschlüsselten Dateikopfs durch Kombinieren der Identifizierungsinformationen mit dem verschlüsselten Dateikopf, wobei die Größe des sicheren Dateikopfs gleich der Größe des ursprünglichen Dateikopfs der Datei, die geschützt werden soll, ist.

2. Verfahren zum Schützen einer Datei nach Anspruch 1, wobei die Verschlüsselung das Verschlüsseln von Inhalt des komprimierten Dateikopfs ist.

3. Verfahren zum Schützen einer Datei nach Anspruch 1 oder 2, wobei ein Schlüssel, der für die Verschlüsselung verwendet wird, Folgendes ist: ein Schlüssel, der durch Verschlüsseln unter Verwendung eines Passworts, das durch einen Teilnehmer eingegeben wird, eines maschineneindeutigen Codes einer lokalen Vorrichtung, in der sich die Datei, die geschützt werden soll, befindet, erhalten wird;
oder ein Passwort, das durch einen Teilnehmer eingegeben wird, und/oder ein maschineneindeutiger Code einer lokalen Vorrichtung, in der sich die Datei, die geschützt werden soll, befindet.

4. Verfahren zum Schützen einer Datei nach Anspruch 3, wobei das Passwort, das durch den Teilnehmer eingeben wird, und der Schlüssel, der durch die Verschlüsselung erhalten wird, beide in einem Teilnehmeridentitätsmodul der lokalen Vorrichtung, in der sich die Datei, die geschützt werden soll, befindet, gespeichert sind.

5. Verfahren zum Schützen einer Datei nach Anspruch 3, wobei die folgenden Arten eingesetzt werden, um den Schlüssel durch Verschlüsseln unter Verwendung des Passworts, das durch den Teilnehmer eingegeben wird, des maschineneindeutigen Codes der lokalen Vorrichtung, in der sich die Datei, die geschützt werden soll, befindet, zu erhalten:
wenn der Teilnehmer ein Aufnahmegerät oder eine Kamera der lokalen Vorrichtung zum ersten Mal verwendet, Auffordern des Teilnehmers, das Passwort einzugeben; und
Erhalten des Schlüssels zur Verschlüsselung durch Verschlüsseln unter Verwendung des Passworts, das durch den Teilnehmer eingegeben wird, des maschineneindeutigen Codes der lokalen Vorrichtung.

6. Verfahren zum Schützen einer Datei nach einem der Ansprüche 1 bis 5, wobei das Ersetzen des ursprünglichen Dateikopfs der Datei, die geschützt werden soll, durch den sicheren Dateikopf Folgendes ist: Schreiben des sicheren Dateikopfs in eine Anfangsposition der Datei, die geschützt werden soll, um den ursprünglichen Dateikopf der Datei zu ersetzen.

7. Verfahren zum Schützen einer Datei nach Anspruch 1, wobei die Datei, die geschützt werden soll, Folgendes umfasst: eines oder mehrere aus einer Audiodatei, einer Bilddatei, einer Videodatei, einer Kartendatendatei, einer 3D-Modell-Datendatei, einer CAD-Datendatei und einer ausführbaren Datei.

8. Verfahren zum Schützen einer Datei nach einem der Ansprüche 1 bis 5, wobei das Verfahren, wenn die lokale Vorrichtung, in der sich die Datei, die geschützt werden soll, befindet, eine Zugriffsoperation auf Inhalt der sicheren Datei, die aus der Datei umgesetzt ist, ausführt, ferner Folgendes umfasst:
Erhalten des sicheren Dateikopfs der sicheren Datei und Erhalten des verschlüsselten Dateikopfs aus dem sicheren Dateikopf;
Erhalten des Inhalts des ursprünglichen Dateikopfs durch Entschlüsseln und Dekomprimieren des verschlüsselten Dateikopfs; und
Erlauben einer entsprechenden Zugriffsoperation, nachdem der Inhalt der sicheren Datei gemäß dem erhaltenen Inhalt des ursprünglichen Dateikopfs erhalten worden ist.

9. Verfahren zum Schützen einer Datei nach Anspruch 8, wobei das Entschlüsseln des verschlüsselten Dateikopfs Folgendes umfasst:
Erhalten eines Schlüssels zum Entschlüsseln, wobei der Schlüssel ein Schlüssel ist, der zum Ausführen der Verschlüsselung auf dem komprimierten ursprünglichen Dateikopf verwendet ist, um den verschlüsselten Dateikopf zu erhalten; und
Entschlüsseln des verschlüsselten Dateikopfs unter Verwendung des erhaltenen Schlüssels und Einsetzen eines Entschlüsselungsalgorithmus, der gleich einem Verschlüsselungsalgorithmus ist oder ihm entspricht, um einen komprimierten ursprünglichen Dateikopf zu erhalten.

10. Verfahren zum Schützen einer Datei nach Anspruch 9, wobei dann, wenn der Schlüssel zum Entschlüsseln erhalten wird, falls der Schlüssel in dem Teilnehmeridentitätsmodul der lokalen Vorrichtung, in der sich die sichere Datei befindet, gespeichert ist, bestimmt wird, ob das Teilnehmeridentitätsmodul in der lokalen Vorrichtung auf einem Betriebsnetz eingetragen ist, und falls es eingetragen ist, der gespeicherte Schlüssel aus dem Teilnehmeridentitätsmodul gelesen wird; und falls es nicht eingetragen ist, Informationen ausgegeben werden, die angeben, dass zurückgegeben wird, dass der entschlüsselte Schlüssel nicht erhalten werden kann und die nachfolgende Verarbeitung beendet wird.

11. Einrichtung zum Schützen einer Datei, die Folgendes umfasst:
eine Verarbeitungseinheit (21) für einen sicheren Dateikopf und eine Ersetzungsverarbeitungseinheit (22), wobei
die Verarbeitungseinheit für einen sicheren Dateikopf konfiguriert ist, einen sicheren Dateikopfs unter Verwendung eines ursprünglichen Dateikopfs einer Datei, die geschützt werden soll, zu erzeugen, wobei dann, wenn keine Genehmigung erteilt wird, der sichere Dateikopf das Zugreifen auf den Inhalt einer Datei, in der sich der sichere Dateikopf befindet, einschränken kann, und
die Ersetzungsbearbeitungseinheit konfiguriert ist, den ursprünglichen Dateikopf der Datei, die geschützt werden soll, durch den sicheren Dateikopf zu ersetzen, um die Datei, die geschützt werden soll, in eine sichere Datei umzusetzen;
wobei die Verarbeitungseinheit für einen sicheren Dateikopf Folgendes umfasst:
eine Komprimierungseinheit (211), eine Verschlüsselungseinheit (212) und eine Identifizierungsinformationshinzufügungseinheit (213); wobei die Komprimierungseinheit (211) konfiguriert ist, den ursprünglichen Dateikopf der Datei, die geschützt werden soll, zu komprimieren;
die Verschlüsselungseinheit (212) konfiguriert ist, den Inhalt des Dateikopfs, der durch die Komprimierungseinheit komprimiert worden ist, zu verschlüsseln, um einen verschlüsselten Dateikopf zu erhalten; und
die Identifizierungsinformationshinzufügungseinheit (213) konfiguriert ist, Identifizierungsinformationen zu dem verschlüsselten Dateikopf, der durch die Verschlüsselung durch die Verschlüsselungseinheit erhalten worden ist, hinzuzufügen, um einen sicheren Dateikopf zu erhalten; wobei die Identifizierungsinformationshinzufügungseinheit (213) vor dem Hinzufügen der Identifizierungsinformationen, die die Datei als die sichere Datei identifizieren, in den verschlüsselten Dateikopf, den sicheren Dateikopf durch Kombinieren der Identifizierungsinformationen mit dem verschlüsselten Dateikopf bildet, wobei die Größe des sicheren Dateikopfs gleich der Größe des ursprünglichen Dateikopfs der Datei, die geschützt werden soll, ist.

12. Einrichtung zum Schützen einer Datei nach Anspruch 11, wobei die Verarbeitungseinheit für einen sicheren Dateikopf ferner Folgendes umfasst:
eine Schlüsselverarbeitungseinheit (214), die konfiguriert ist, unter Verwendung eines Passworts, das durch einen Teilnehmer eingegeben wird, einen maschineneindeutigen Code einer lokalen Vorrichtung, in der sich die Datei, die geschützt werden soll, befindet, zu verschlüsseln, um einen Schlüssel zu erhalten.

13. Einrichtung zum Schützen einer Datei nach Anspruch 11 oder 12, wobei die Verarbeitungseinheit für einen sicheren Dateikopf ferner Folgendes umfasst:
eine Entschlüsselung (215) und eine Dekomprimierung (216), wobei die Entschlüsselungseinheit konfiguriert ist, den verschlüsselten Dateikopf in dem sicheren Dateikopf der sicheren Datei zu entschlüsseln; und
die Dekomprimierungseinheit konfiguriert ist, den Inhalt des Dateikopfs, der durch die Entschlüsselungseinheit entschlüsselt worden ist, zu dekomprimieren, um den ursprünglichen Dateikopf zu erhalten.

14. Einrichtung zum Schützen einer Datei nach Anspruch 13, wobei die Entschlüsselungseinheit Folgendes umfasst:
ein Bestimmungsverarbeitungsmodul (2151) und ein Schlüssellesemodul (2152), wobei
das Bestimmungsverarbeitungsmodul konfiguriert ist: wenn ein Schlüssel zum Entschlüsseln erhalten wird, falls der Schlüssel in einem Teilnehmeridentitätsmodul der lokalen Vorrichtung, in der sich die sichere Datei befindet, gespeichert ist, zu bestimmen, ob das Teilnehmeridentitätsmodul der lokalen Vorrichtung auf einem Betriebsnetz eingetragen ist, und falls es eingetragen ist, eine Anweisung zur Erlaubnis des Lesens des Schlüssels zu dem Schlüssellesemodul zu senden, und falls es nicht eingetragen ist, Ausgabeinformationen zurückzugeben, die angeben, dass der entschlüsselte Schlüssel nicht erhalten werden kann, und eine Anweisung zum Beenden der nachfolgenden Verarbeitung zu senden; und
das Schlüssellesemodul konfiguriert ist, nachdem die Anweisung zur Erlaubnis zum Lesen des Schlüssels von dem Bestimmungsverarbeitungsmodul erhalten worden ist, den gespeicherten Schlüssel aus dem Teilnehmeridentitätsmodul der lokalen Vorrichtung zu lesen.

## Revendications

1. Procédé de protection d'un fichier, comprenant :
la génération d'un en-tête de fichier sécurisé à l'aide d'un en-tête de fichier d'origine d'un fichier à protéger, dans lequel quand aucune autorisation n'est accordée, l'en-tête de fichier sécurisé est en mesure de limiter l'accès au contenu d'un fichier où se trouve l'en-tête de fichier sécurisé ; et
le remplacement de l'en-tête de fichier d'origine du fichier à protéger par l'en-tête de fichier sécurisé pour convertir le fichier à protéger en un fichier sécurisé ;
dans lequel la génération d'un en-tête de fichier sécurisé à l'aide d'un en-tête du fichier d'origine d'un fichier à protéger consiste à : acquérir un en-tête de fichier crypté en compressant et cryptant l'en-tête de fichier d'origine du fichier à protéger puis en acquérant l'en-tête de fichier sécurisé en ajoutant des informations d'identification à l'en-tête de fichier crypté ;
dans lequel l'ajout des informations d'identification à l'en-tête de fichier crypté s'effectue de la manière suivante :
en formant, avant l'ajout des informations d'identification qui identifient le fichier comme étant le fichier sécurisé dans l'en-tête de fichier crypté, l'en-tête de fichier sécurisé en combinant les informations d'identification à l'en-tête de fichier crypté, dans lequel la taille de l'en-tête de fichier sécurisé est égale à la taille de l'en-tête de fichier d'origine du fichier à protéger.

2. Procédé de protection d'un fichier selon la revendication 1, dans lequel le cryptage consiste à crypter le contenu de l'en-tête de fichier compressé.

3. Procédé de protection d'un fichier selon la revendication 1 ou 2, dans lequel une clé utilisée pour le cryptage est : une clé acquise par cryptage, à l'aide d'un mot de passe saisi par un abonné, d'un code unique de machine d'un dispositif local où se trouve le fichier à protéger ;
ou, un mot de passe saisi par un abonné et/ou un code unique de machine d'un dispositif local où se trouve le fichier à protéger.

4. Procédé de protection d'un fichier selon la revendication 3, dans lequel le mot de passe saisi par l'abonné et la clé acquise par le cryptage sont tous les deux mémorisés dans un module d'identité d'abonné du dispositif local où se trouve le fichier à protéger.

5. Procédé de protection d'un fichier selon la revendication 3, dans lequel l'acquisition de la clé par cryptage, à l'aide du mode de passe saisi par l'abonné, du code unique de machine du dispositif local où se trouve le fichier à protéger s'effectue des manières suivantes :
quand l'abonné utilise un enregistreur ou une caméra du dispositif local pour la première fois, en incitant l'abonné à saisir le mot de passe ; et
en acquérant la clé de cryptage en cryptant, à l'aide du mot de passe saisi par l'abonné, le code unique de machine du dispositif local.

6. Procédé de protection d'un fichier selon l'une quelconque des revendications 1 à 5, dans lequel le remplacement de l'en-tête de fichier d'origine du fichier à protéger par l'en-tête de fichier sécurisé consiste à : écrire l'en-tête de fichier sécurisé à une position initiale du fichier à protéger pour remplacer l'en-tête de fichier d'origine du fichier.

7. Procédé de protection d'un fichier selon la revendication 1, dans lequel le fichier à protéger comprend : n'importe lequel ou lesquels d'un fichier audio, d'un fichier d'image, d'un fichier vidéo, d'un fichier de données de carte, d'un fichier de données de modèle 3D, d'un fichier de données de CAO, et d'un fichier exécutable.

8. Procédé de protection d'un fichier selon l'une quelconque des revendications 1 à 5, le procédé comprenant en outre, quand le dispositif local où se trouve le fichier à protéger exécute une opération d'accès sur le contenu du fichier sécurisé converti à partir du fichier :
l'acquisition de l'en-tête de fichier sécurisé du fichier sécurisé et l'acquisition de l'en-tête de fichier crypté à partir de l'en-tête de fichier sécurisé ;
l'acquisition du contenu de l'en-tête de fichier d'origine en décryptant et décompressant l'en-tête de fichier crypté ; et
l'autorisation d'une opération d'accès correspondant après l'acquisition du contenu du fichier sécurisé conformément au contenu acquis de l'en-tête de fichier d'origine.

9. Procédé de protection d'un fichier selon la revendication 8, dans lequel le décryptage de l'en-tête de fichier crypté comprend :
l'acquisition d'une clé de décryptage, dans lequel la clé est une clé utilisée pour exécuter un cryptage sur l'en-tête de fichier d'origine compressé afin d'acquérir l'en-tête de fichier crypté ; et
le décryptage de l'en-tête de fichier crypté à l'aide de la clé acquise et en adoptant un algorithme de décryptage identique ou correspondant à un algorithme de cryptage pour acquérir un en-tête de fichier d'origine compressé.

10. Procédé de protection d'un fichier selon la revendication 9, dans lequel, quand la clé de décryptage est acquise, si la clé est mémorisée dans le module d'identité d'abonné du dispositif local où se trouve le fichier sécurisé, il est déterminé que le module d'identité d'abonné dans le dispositif local est enregistré ou non sur un réseau d'exploitation, et s'il est enregistré, la clé mémorisée est lue à partir du module d'identité d'abonné ; et s'il n'est pas enregistré, des informations d'invite indiquant que la clé décryptée n'a pas pu être acquise sont envoyées et le traitement ultérieur est arrêté.

11. Appareil de protection d'un fichier, comprenant :
une unité de traitement d'en-tête de fichier sécurisé (21) et une unité de traitement de remplacement (22), dans lequel
l'unité de traitement d'en-tête de fichier sécurisé est configurée pour générer un en-tête de fichier sécurisé à l'aide d'un en-tête de fichier d'origine d'un fichier à protéger, dans lequel quand aucune autorisation n'est accordée, l'en-tête de fichier sécurisé est en mesure de limiter l'accès au contenu d'un fichier où se trouve l'en-tête de fichier sécurisé, et
l'unité de traitement de remplacement est configurée pour remplacer l'en-tête de fichier d'origine du fichier à protéger par l'en-tête de fichier sécurisé pour convertir le fichier à protéger en un fichier sécurisé ;
dans lequel l'unité de traitement d'en-tête de fichier sécurisé comprend :
une unité de compression (211), une unité de cryptage (212), et une unité d'ajout d'informations d'identification (213) ; dans lequel l'unité de compression (211) est configurée pour compresser l'en-tête de fichier d'origine du fichier à protéger ;
l'unité de cryptage (212) est configurée pour crypter le contenu de l'en-tête de fichier compressé par l'unité de compression pour un en-tête de fichier crypté ; et
l'unité d'ajout d'informations d'identification (213) est configurée pour ajouter des informations d'identification à l'en-tête de fichier crypté acquis par le biais du cryptage par l'unité de cryptage afin d'acquérir un en-tête de fichier sécurisé ; dans lequel l'unité d'ajout d'informations d'identification (213) forme, avant l'ajout des informations d'identification qui identifient le fichier comme étant le fichier sécurisé dans l'en-tête de fichier crypté, l'en-tête de fichier sécurisé en combinant les informations d'identification à l'en-tête de fichier crypté, dans lequel la taille de l'en-tête de fichier sécurisé est égale à la taille de l'en-tête de fichier d'origine du fichier à protéger.

12. Appareil de protection d'un fichier selon la revendication 11, dans lequel l'unité de traitement d'en-tête de fichier sécurisé comprend en outre :
une unité de traitement de clé (214), configurée pour crypter, à l'aide d'un mot de passe saisi par un abonné, un code unique de machine d'un dispositif local où se trouve le fichier à protéger afin d'acquérir une clé.

13. Appareil de protection d'un fichier selon la revendication 11 ou 12, dans lequel l'unité de traitement d'en-tête de fichier sécurisé comprend en outre :
une unité de décryptage (215) et une unité de décompression (216) ; dans lequel l'unité de décryptage est configurée pour décrypter l'en-tête de fichier crypté dans l'en-tête de fichier sécurisé du fichier sécurisé ; et
l'unité de décompression est configurée pour décompresser le contenu de l'en-tête de fichier décrypté par l'unité de décryptage pour acquérir l'en-tête du fichier d'origine.

14. Appareil de protection d'un fichier selon la revendication 13, dans lequel l'unité de décryptage comprend :
un module de traitement de détermination (2151) et un module de lecture de clé (2152) ; dans lequel
le module de traitement de détermination est configuré pour : quand la clé de décryptage est acquise, si la clé est mémorisée dans un module d'identité d'abonné du dispositif local où se trouve le fichier sécurisé, déterminer que le module d'identité d'abonné dans le dispositif local est enregistré ou non sur un réseau d'exploitation, et s'il est enregistré, envoyer une instruction d'autorisation de lecture de clé au module de lecture de clé ; et s'il n'est pas enregistré, renvoyer des informations d'invite indiquant que la clé décryptée n'a pas pu être acquise et envoyer une instruction d'arrêt du traitement ultérieur ;
le module de lecture de clé est configuré pour lire, après réception de l'instruction d'autorisation de lecture de la clé depuis le module de traitement de détermination, la clé mémorisée depuis le module d'identité d'abonné du dispositif local.
